(19) Europäisches Patentamt
European Patent Office
Office européen des brevets

(11) EP 2 518 796 B1

# (12) EUROPEAN PATENT SPECIFICATION

(45) Date of publication and mention of the grant of the patent:
**09.03.2016 Bulletin 2016/10**

(21) Application number: **10838896.8**

(22) Date of filing: **09.12.2010**

(51) Int Cl.:
***H01M 4/13*** *(2010.01)* ***H01M 4/134*** *(2010.01)*
***H01M 4/36*** *(2006.01)* ***H01M 4/38*** *(2006.01)*
***H01M 4/62*** *(2006.01)* ***H01M 4/1395*** *(2010.01)*
*H01M 10/0525 (2010.01)*

(86) International application number:
**PCT/JP2010/007171**

(87) International publication number:
**WO 2011/077656 (30.06.2011 Gazette 2011/26)**

## (54) NEGATIVE ELECTRODE FOR LITHIUM ION SECONDARY CELL

NEGATIVE ELEKTRODE FÜR EINE LITHIUMIONEN-SEKUNDÄRBATTERIE

ELECTRODE NÉGATIVE POUR PILE RECHARGEABLE AU LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2009 JP 2009292943**

(43) Date of publication of application:
**31.10.2012 Bulletin 2012/44**

(73) Proprietor: **Kabushiki Kaisha Toyota Jidoshokki**
**Kariya-shi, Aichi 448-8671 (JP)**

(72) Inventors:
- **HIROSE, Takayuki**
**Kariya-shi**
**Aichi 448-8671 (JP)**
- **MIYOSHI, Manabu**
**Kariya-shi**
**Aichi 448-8671 (JP)**
- **MURASE, Hitotoshi**
**Kariya-shi**
**Aichi 448-8671 (JP)**

(74) Representative: **TBK**
**Bavariaring 4-6**
**80336 München (DE)**

(56) References cited:
**WO-A1-2007/044315** **WO-A1-2009/022513**
**WO-A1-2009/128319** **JP-A- 2001 216 961**
**JP-A- 2002 220 431** **JP-A- 2006 100 255**
**JP-A- 2009 043 678** **US-A1- 2006 051 670**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 518 796 B1

## Description

### TECHNICAL FIELD

The present invention is one which relates to a negative electrode for lithium-ion secondary battery.

### BACKGROUND ART

Since downsizing and weight saving of electronic devices have been advancing, secondary batteries whose energy density is high have been desired for their power source. A secondary battery is one that takes out chemical energy, which the positive-electrode active material and negative-electrode active material possess, to the outside as electric energy by means of chemical reaction through electrolyte. In such secondary batteries, lithium-ion secondary batteries are secondary batteries, which possess a higher energy density, among those that have been put in practical use.

For lithium-ion secondary battery, lithium-containing metallic composite oxides, such as lithium-cobalt composite oxides, have been used mainly as an active material for the positive electrode. As for an active material for the negative electrode, carbonaceous materials, which have a multi-layered structure that enables the insertion of lithium ions between the layers (i.e., the formation of lithium intercalation complex) and the discharge of lithium ions out from between the layers, have been used mainly.

The electrode plates for positive electrode and negative electrode are made in the following manner: the respective active materials, a binder resin and a conductive additive are dispersed in a solvent to make them into a slurry, respectively; then the resulting slurries are applied onto opposite faces of a metallic foil, namely, a current collector; and then the solvent is dry removed to form a mixture-agent layers on the current collectors, respectively; and thereafter the resulting mixture-agent layers and current collector are compression molded with a roller pressing machine, thereby making them into a positive-electrode electrode plate or a negative-electrode electrode plate.

Moreover, as the negative-electrode active material for lithium-ion secondary battery, the development of negative-electrode active materials, which possess a charged/discharged capacity that greatly exceeds the theoretical capacity of carbonaceous material, has been advanced recently. For example, materials that include a metal, such as Si or Sn, which is capable of alloying with lithium, are regarded prospective.

In the case of using Si or Sn, and so forth, for an active material, these materials exhibit a great volumetric change that is accompanied by the absorption/release of Li at the time of charging/discharging. Consequently, it is difficult to maintain the bonded state between these materials and current collectors satisfactorily. As being accompanied by the insertion and elimination of lithium, these materials repeat expansion and contraction during charging/discharging cycles. Due to such expansions and contractions of the active material, their active-material particles have been pulverized finely, or have come to be detached from current collectors. Because the active material has pulverized finely or has come to be detached, the cyclability of the resulting lithium-ion secondary battery degrades remarkably.

In order to upgrade the cyclability, for example, in order to make the active materials less likely to come off or fall down, various combinations of binder resins and active materials have been investigated.

In Patent Literature No. 1, an electrode for secondary battery is proposed, electrode which uses an alkoxy group-containing resin as a binder resin. Patent Literature No. 2 shows an electrode for a secondary lithium-ion battery wherein an active material is surface treated.

Patent Literature No. 1: Japanese Unexamined Patent Publication (KOKAI) Gazette No. 2009-43, 678 Patent Literature No. 2: US2006/0051670

### DISCLOSURE OF THE INVENTION

### Assignment to be Solved by the Invention

As set forth in Patent Literature No. 1, although the combinations of active materials and binder resins that bind them together have been investigated variously, there is still much room for upgrading the cyclability. Consequently, a negative electrode for lithium-ion secondary battery has been yet sought for even at present, negative electrode which is much better in the cyclability.

The present invention is one which has been done in view of such circumstances, and it is an object to provide a negative electrode for lithium-ion secondary battery, negative electrode which has better cyclability by furthermore suppressing the active material from coming off or falling down from the current collector, even when using such an active material that exhibits a large volumetric change that is accompanied by the absorption and release of lithium.

Means for Solving the Assignment

As a result of earnest studies being made by the present inventors, they found out that it is possible to provide a negative electrode for lithium-ion secondary battery, negative electrode which has excellent cyclability, by means of surface-treating an active material in advance with use of a surface treatment agent, which is specified by a general formula: $X\text{-}Si(CH_3)_n\text{-}(OR)_{3-n}$ wherein "n" is 0, 1 , or 2; "OR" is a methoxy group, or an ethoxy group; and "X" is a methoxy group, an ethoxy group, or a vinyl group, and then combining this surface-treated active material with a binder, which has an alkoxy group-containing silane-modified part.

Specifically, a negative electrode for lithium-ion secondary battery according to the present invention is defined in claim 1.

The aforementioned surface treatment agent has at least one of an methoxy group and an ethoxy group. The methoxy group, or the ethoxy group turns into a hydroxyl group (or OH group) when being hydrolyzed. This hydroxyl group reacts with a hydroxyl group that exists on the active material's surface. Consequently, it is believed that the aforementioned surface treatment agent bonds onto the surface of the active material.

It is preferable that this surface treatment agent can be used in an amount of from 1% by mass to 10% by mass with respect to said active material being taken as 100% by mass. When using the surface treatment agent in an amount of greater than 10% by mass, $SiO_2$ films come to occur on the surface of the active material. Since $SiO_2$ shows insulation properties, the resulting conductivity gets worse, and so it is not preferable in terms of resultant battery characteristics. When using the surface treatment agent in an amount of less than 1% by mass, it is not possible to see any advantages that result frombeing surface-treated.

Moreover, when the hydroxyl groups on the surface of the active material thus react with the surface treatment agent, active sites on the surface of the active material come to be covered with the surface treatment agent.

Consequently, it is possible to suppress the decomposition of electrolytic solutions due to the active sites on the surface of the active material.

Since the aforementioned binder includes an alkoxy group-containing silane-modified part, it is possible for the aforementioned surface treatment agent to form siloxane bonds (or -Si-O-Si-) with the aforementioned binder. Consequently, the active material bonds with the binder favorably via the surface treatment agent.

Moreover, since the aforementioned binder includes an alkoxy group-containing silane-modified part, it exhibits good adhesiveness to the current collector as well as to conductive additives, that is, to inorganic components.

The aforementioned binder comprises any of alkoxy group-containing silane-modified polyimide resins, alkoxy group-containing silane-modified polyamide-imide resins, alkoxy group-containing silane-modified polyurethane resins, alkoxy group-containing silane-modified epoxy resins, alkoxy group-containing silane-modified acrylic resins, and alkoxy group-containing silane-modified phenolic resins.

These binders are all a hybrid of a resin and an alkoxy group-containing silane-modified part, respectively.

Bymeans of thus combining the aforementioned surface treatment agent with the aforementioned binder, the active material and so on are retained firmly onto the current collector via the binder.

It is preferable that the active material can include Si. The theoretical capacity of carbon, which has been used commonly for an active material for negative electrode, is 372 $mAhg^{-1}$, whereas a theoretical capacity of Si is 4,200 $mAhg^{-1}$. Thus, Si has a high-capacity theoretical capacity, compared with that of carbon.

Moreover, it is possible for Si to satisfactorily bond with the aforementioned surface treatment agent. Consequently, Si, the surface treatment agent and the binder are bonded satisfactorily with each other, and thereby it is possible for Si, namely, the active material, to be firmly retained onto the current collector.

The active-material layer is herein explained using Fig. 1. In Fig. 1, a current collector 1, and an active-material layer 6, which is formed on the current collector 1 are illustrated. An active material 2, which has been surface-treated by the surface treatment agent, and a conductive additive 3 are retained on the current collector 1 via a binder 4, and thereby the active-material layer 6 is formed. A surface-treatment-agent layer 5 is formed on at least a part of the surface of the active material 2 that has been surface-treated by the surface treatment agent. Since Fig. 1 is a schematic diagram, the sizes and configurations of the respective substances are not those which are accurate.

As illustrated in this Fig. 1, the active material 2 is retained firmly onto the current collector 1 via the surface-treatment-agent layer 5 and binder 4 in the thus obtained active-material layer 6. Since the active material 2 is thus firmly retained onto the current collector 1, the active material 2 is suppressed from coming off or falling down from the current collector 1 even when the active material 2 undergoes volumetric changes as being accompanied by the absorption and release of Li at the time of charging/discharging.

Effect of the Invention

By means of using the negative electrode for lithium-ion secondary battery according to the present invention, it is possible for lithium-ion secondary batteries resulting therefrom to demonstrate excellent cyclabilities.

BRIEF DESCRIPTION OF THE DRAWINGS

Fig. 1 is a schematic diagram that explains a negative electrode for lithium-ion secondary battery according to the present invention;

Fig. 2 is a graph that shows results of a charging/discharging cyclic test on model batteries that used negative electrodes being labeled Example Nos. 1 through 4 according to the present invention and on model batteries that used negative electrodes being labeled Comparative Example Nos. 1 through 4, and illustrates the relationships between number of cycles and discharged electric-current capacity maintenance ratios;
Fig. 3 is an enlarged diagram of Fig. 2; and
Fig. 4 is an explanatory diagram that shows a constitution of an electrode assembly in a laminated battery.

BEST MODES FOR CARRYING OUT THE INVENTION

A negative electrode for lithium-ion secondary battery according to the present invention has a current collector, and an active-material layer that is formed on a surface of the current collector. The active-material layer is formed by means of binding a conductive additive and an active material, which is surface-treated with use of a surface treatment agent that is specified by a general formula: $X\text{-}Si(CH_3)_n\text{-}(OR)_{3-n}$ wherein: "n" is 0, 1 or 2; "OR" is a methoxy group, or an ethoxy group; and "X" is a methoxy group, an ethoxy group, or a vinyl group, on the surface of the current collector via a binder, namely, a resin that has an alkoxy group-containing silane-modified part.

The "current collector" refers to a chemically-inactive highly-electron-conductive body for keeping electric current flowing to electrodes during discharging or charging. Although it is possible to adopt such a configuration as a foil or plate, and the like, for the current collector, the configuration is not at all limited especially as far as it is a configuration that fits for the objective. As for the current collector, it is possible to suitably use copper foils, or aluminum foils, for instance.

The conductive additive is added to the active-material layer in order to enhance the active-material layer in the electric conductivity. As for the conductive additive, it is possible to use one of the following, namely, carbonaceous fine particles: carbon black, graphite, acetylene black, KETJENBLACK, carbon fibers, and the like, independently; or to combine two or more species of them to use.

The "active material" refers to a substance that contributes directly to electrode reactions, such as charging reactions and discharging reactions. In the case of lithium-ion secondary battery, materials, into which lithium can be inserted and from which it can be eliminated, are used for the negative-electrode active material, so carbon-system materials, or metals or oxides of those metals that can turn lithium into alloys, and the like, , are employed, for instance. It is possible to use one of these active materials independently, or to combine two or more species of them to use. The active material to be used in the present invention is not limited especially. However, it is preferable that such an active material can have a powdery configuration, and it is preferable that its powdery particle diameter can be 100 $\mu$m or less.

As for the active material, it is possible to preferably use graphite, Si, Sn, Al, Ag, Zn, Ge, Cd or Pb, and oxides of these metals, for instance.

The active material, which is used in the present invention, is treated with a surface treatment agent. The surface treatment agent bonds with hydroxyl groups that exist in the active material's surface. Compared with carbonaceous materials, the aforementioned metals, or oxides of those metals, tend to have hydroxide layers in the surfaces. Therefore, the metals, or oxides of those metals, can be used preferably as the active material.

In particular, Si is likely to bond with surface treatment agents. Consequently, it is more preferable that the active material can include Si. For example, Si, SiO, $SiO_2$, alloys that include Si, or Si compounds are employable as the active material.

A surface treatment agent that is used in the present invention is specified by a general formula: $X\text{-}Si(CH_3)_n\text{-}(OR)_{3-n}$ wherein: "n" is 0, 1 or 2; "OR" is a methoxy group, or an ethoxy group; and "X" is a methoxy group, an ethoxy group, or a vinyl group.

As a specific example of the aforementioned surface treatment agent, it is possible to name tetramethoxysilane, tetraethoxysilane, vinyltrimethoxysilane, vinyltriethoxysilane, methoxytriethoxysilane, or ethoxytrimethoxysilane, and the like, in the case of "n" = 0.

In the case of "n" = 1, it is possible to name methyltrimethoxysilane, methyltriethoxysilane, methylmethoxydiethoxysilane, methylethoxydimethoxysilane, methylvinyldimethoxysilane, ormethylvinyldiethoxysilane, and the like.

In the case of "n" = 2, it is possible to name dimethyldiethoxysilane, dimethyldimethoxysilane, dimethylmethoxyethoxysilane, dimethylvinylmethoxysilane, or dimethylvinylethoxysilane, and the like.

In particular, as for the surface treatment agent, tetramethoxysilane, tetraethoxysilane, vinyltrimethoxysilane, or vinyltriethoxysilane is preferable.

When tetramethoxysilane and tetraethoxysilane are hydrolyzed, both of them turn into $Si(OH)_4$, and thereafter it is possible for them to make a siloxane bond in four directions when the products are condensed by dehydration.

Consequently, tetramethoxysilane and tetraethoxysilane are bonded onto the surface of the active material to cover the active material, and at the same time they can firmly bond the active material with the binder.

Moreover, in vinyltrimethoxysilane and vinyltriethoxysilane, their vinyl groups polymerize at the time of charging/discharging. Consequently, it is possible for vinyltrimethoxysilane and vinyltriethoxysilane being bonded onto the surface of the active material to stabilize the superficial states of the active material.

In the aforementioned surface treatment agent, the methoxy groups or the ethoxy groups are hydrolyzed to turn into hydroxyl groups. By means of condensing the resulting hydroxyl groups of the surface treatment agent with the hydroxyl groups of the active material by dehydration, the surface treatment agent bonds with the active material. Thus, a surface-treatment-agent layer is formed on at least a part of the surface of the active material.

A method for using the aforementioned surface treatment agent for surface-treating the active material is not limited especially. For example, a solution in which the surface treatment agent is dissolved in water or alcohol and the like is made ready, and then the aforementioned solution is dropped onto the active material in a small amount little by little while stirring the active material. Thereafter, the active material being wetted by the surface treatment agent is dried, and is then heat-treated at from 80°C to 200°C. By means of thus surface-treating the active material with the surface treatment agent, it is possible to form a surface-treatment-agent layer on the surface of the active material partially at least.

Here, it is needed that the active material be surface-treated before being mixed with the binder, and the like. This is because, when the active material is surface-treated in advance, the surface treatment agent is likely to be bonded onto the active material.

Upon surface-treating the active material, it is preferable to use the surface treatment agent in an amount from 1% by mass to 10% by mass with respect to the active material being taken as 100% by mass. Furthermore, in the case of setting the active material at 100% by mass, it is preferable to use the surface treatment agent in an amount of from 3% by mass to 9% by mass.

By means of using the surface treatment agent in an amount of form 3% by mass to 9% by mass, it is possible to cover almost all of the surfaces of the active material with the surface treatment agent without ever greatly lowering the electric conductivity of the resulting active-material layer.

The active material being thus surface-treated is retained onto the current collector by means of the above-described binder. The binder, namely, a resin having an alkoxy group-containing silane-modified part, comprises any of alkoxy group-containing silane-modified polyimide resins, alkoxy group-containing silane-modified polyamide-imide resins, alkoxy group-containing silane-modified polyurethane resins, alkoxy group-containing silane-modified epoxy resins, alkoxy group-containing silane-modified acrylic resins, and alkoxy group-containing silane-modified phenolic resins.

Any of these binders are a hybrid between a resin and an alkoxy group-containing silane-modified part, respectively. The aforementioned binder has an alkoxy group-containing silane-modified part. In other words, the aforementioned binder has a structure being made of parts that have undergone sol-gel reaction.

The "structure being made of parts that have undergone sol-gel reaction" is a structure that contributes to reactions upon carrying out sol-gel process. The "sol-gel process" is the following method. A solution of inorganic or organometallic salt is adapted into a starting solution, and the resultant solution is turned into a colloid solution (Sol) by means of subjecting this solution of inorganic or organometallic salt to hydrolysis and condensation polymerization reactions. The colloid solution (Sol) is turned into a solid (Gel) that has lost flowability by means of facilitating the reactions furthermore.

Since the binder has the above-described structure being made of parts that have undergone sol-gel reaction, various reactions occur between the parts that have undergone sol-gel reaction; between the resins' hydroxyl groups and the parts that have undergone sol-gel reaction; between the surface treatment agent's hydroxyl groups and parts that have undergone sol-gel reaction, and the like, at the time of curing the resins.

The hydroxyl groups of the surface treatment agent react with the binder's alkoxy group-containing silane-modified parts being mentioned above, thereby forming siloxane bonds (-Si-O-Si-). Consequently, the active material is retained onto the current collector firmly via the binder.

It is possible to synthesize the aforementioned binders by means of a publicly-known technique, respectively.

For example, an alkoxy group-containing silane-modified polyimide resin can be formed by reacting precursors, namely, a polyamic acid comprising a carboxylic-acid-anhydride component and a diamine component, and an alkoxysilane partial condensate. As for the alkoxysilane partial condensate, it is possible to use those which are obtained by condensing hydrolysable alkoxysilane monomers partially in the presence of acid or base catalyst and water.

Moreover, it is also possible to obtain an alkoxy group-containing silane-modified polyimide resin even by curing an alkoxy group-containing silane-modified polyamic acid resin. An alkoxy group-containing silane-modified polyamic acid resin can be prepared as follows: an alkoxysilane partial condensate is reacted with an epoxy compound in advance to turn it into an epoxy group-containing alkoxysilane partial condensate; and the resulting epoxy group-containing alkoxysilane partial condensate is then reacted with a polyamic acid.

Moreover, as for the above-described binder, it is possible to use commercial products suitably. For example,

it is possible to use a variety of such commercial products as the following: "COMPOCERAN E (product name)" (produced by ARAKAWA CHEMICAL INDUSTRIES, LTD.), one of alkoxy group-containing silane-modified bisphenol type-A epoxy resins or alkoxy group-containing silane-modified novolac-type epoxy resins; "COMPOCERAN AC (product name)" (produced by ARAKAWA CHEMICAL INDUSTRIES, LTD.), one of alkoxy group-containing silane-modified acrylic resins; "COMPOCERAN P (product name) " (produced by ARAKAWA CHEMICAL INDUSTRIES, LTD.), one of alkoxy group-containing silane-modified phenolic resins; "COMPOCERAN H800 (product name) " (produced by ARAKAWA CHEMICAL INDUSTRIES, LTD.), one of alkoxy group-containing silane-modified polyamic acid resins; "COMPOCERAN H700 (product name)" (produced by ARAKAWA CHEMICAL INDUSTRIES, LTD.), one of alkoxy group-containing silane-modified soluble polyimide resins; "UREANO U (product name)" (produced by ARAKAWA CHEMICAL INDUSTRIES, LTD.), one of alkoxy group-containing silane-modified polyurethane resins; or "COMPOCERAN H900 (product name)" (produced by ARAKAWA CHEMICAL INDUSTRIES, LTD.), one of alkoxy group-containing silane-modified polyamide-imide resins, and the like.

For example, an alkoxy group-containing silane-modified polyimide resin has a structure that is specified by (Chemical Formula 1) shown below.

(Chemical Formula 1)

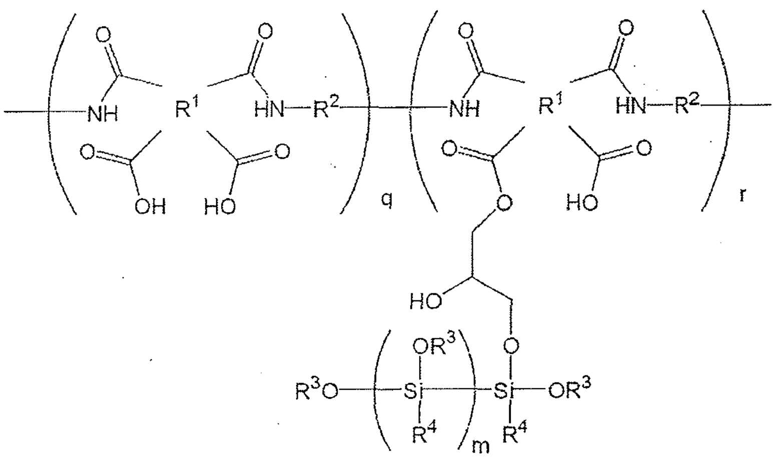

where

"$R^1$" is 3,3',4,4'-biphenyltetracarboxylic dianhydride, or pyromellitic anhydride;
"$R^2$" is 4,4'-diaminodiphenyl ether, or p-phenylenediamine;
"$R^3$" is a methyl group;
"$R^4$" is a methoxy group;
"q" is from 1 to 2,500;
"r" is from 1 to 1,000; and
"m" is from 1 to 5

The binder is used as a binding agent when binding the active material and conductive additive onto the current collector. It is required for the binder to bind the active material, and the like, together in an amount as less as possible.

Consequently, it is desirable that an amount of the binder can be from 1% by mass to 40% by mass when a summed total of the active material, the conductive additive and the binder is taken as 100% by mass.

Moreover, a manufacturing process for the negative electrode for lithium-ion secondary battery according to the present invention is not limited especially. As for the manufacturing processes, it is possible to use common manufacturing process. For example, it is possible to use the following process. One, which is made into a slurry by dispersing the active material having been treated by the surface treatment agent, the binder and the conductive additive in a solvent, is applied on the current collector. And, the active material, which has been treated by the surface treatment agent, and the conductive additive are retained on the current collector by means of curing the binder that has been applied.

The "applying" means to put a binder, a surface-treated active material and a conductive additive onto a collector. As an application method, it is possible to use the following application methods that have been used generally when making electrodes for secondary battery: roll coating methods; dip coating methods; doctor blade methods; spray coating methods; or curtain coating methods, and the like.

It is possible to apply the binder, surface-treated active material and conductive additive onto the current collector after mixing them in advance and then turning them into a slurry by adding a solvent, or the like, to the resulting mixture. As an employable solvent, N-methyl-2-pyrrolidone (or NMP), methanol or methylisobutylketone (or MIBK), and so forth, can be given.

In order to prepare the aforementioned slurry, it is possible to employ a general mixing apparatus, such as planetary mixers, defoaming kneaders, ball mills, paint shakers, vibrational mills, Raikai mixers (or attritors) and agitator mills. It is preferable that an applied thickness of the slurry can be from 5 $\mu$m to 40 $\mu$m.

Moreover, it is preferable that a mixing proportion of the surface-treated active material, binder and conductive additive can be set so that the surface-treated active material: the conductive additive: the binder = from 40:40:20 to 90:5:5 by % by mass (or % by weight) when a summed total of the surface-treated active material, conductive additive and binder is taken as 100% by mass (or % by weight) .

Note that this mixing proportion specifies the upper limit and lower limit of each of the components. In the case of the surface-treated active material, the upper limit is 90% by mass, and the lower limit is 40% by mass, for instance.

It is allowable that the curing of the binder can be carried out under curing conditions that comply with each of the binders to be employed. Moreover, when curing the binder, sol-gel curing reactions also occur depending on the specific alkoxy group-containing silane-modified parts that the binder has. Since resins in which sol-gel curing reactions have occurred have gelated structures that are made of fine silica parts (or highly networked structures being made of siloxane bonds), they are good in the adhesiveness to the surface-treated active material, the conductive additive and the current collector, respectively.

## EXAMPLES

Hereinafter,thepresentinvention willbeexplained in more detail while giving one of the examples.

A negative electrode for lithium-ion secondary battery according to the present invention was made as follows, and then a charging/discharging cyclic test was carried out using a model battery for evaluation. In the test, a laminated cell-type battery was used, laminated cell-type battery in which the negative electrode was adapted into an electrode to be evaluated.

(Surface Treatment for Active Material)

As a negative-electrode active material, a commercially available Si powder with a purity of 99.9% or more was made ready, Si powder which was produced by FUKUDA METAL FOIL & POWDER Co., Ltd., and whose maximum particle diameter was 10 $\mu$m or less and whose average particle diameter was 2 $\mu$m approximately (being referred to as "Si" hereinafter). As a surface treatment agent, the following were made ready, respectively: tetraethoxysilane ("KBE-04" produced by SHIN-ETSU CHEMICAL Co., Ltd.); and vinyltriethoxysilane ("KBE-1003" produced by SHIN-ETSU CHEMICAL Co., Ltd.). A surface treatment was carried out according to the method that has been explained beforehand.

A first one which had undergone the surface treatment using the tetraethoxysilane in an amount of 9% by mass with respect to 100%-by-mass Si was labeled Treated Active Material "A." A second one which had undergone the surface treatment using the vinyltriethoxysilane in an amount of 9% by mass with respect to 100%-by-mass Si was labeled Treated Active Material "B." A third one which had undergone the surface treatment using the tetraethoxysilane in an amount of 3% by mass with respect to 100%-by-mass Si was labeled Treated Active Material "C." A fourth one which had undergone the surface treatment using the vinyltriethoxysilane in an amount of 3% by mass with respect to 100%-by-mass Si was labeled Treated Active Material "D."

(Making of Electrodes for Evaluation)

Electrodes were made using the following: Treated Active Materials "A" through "D" being described as above, and the Si that had not been surface-treated at all, respectively, as the negative-electrode active material; an alkoxy group-containing silane-modified polyamic acid resin that had a structure being specified in (Chemical Formula 1) above, whose solvent composition was N,N-dimethylacetamide (or DMAc), which had cured residuals in an amount of 15.1%, which exhibited a viscosity of 5, 100 mPa · s at 25 °C and which had silica in an amount of 2% by weight in the cured residuals, one of polyimide resins that were produced by ARAKAWA CHEMICAL INDUSTRIES, LTD., and polyvinylidene fluoride (or PVDF (produced by KUREHA)), respectively, as the binder agent; and moreover "KB" produced by KETJENBLACK INTERNATIONAL Corp. (or KETJENBLACK whose average particle diameter was from 30 to 50 nm) as the conductive additive.

(Example No. 1)

A slurry was prepared by putting Treated Active Material "A" in an amount of 80% by weight into a 15%-by-weight paste in which the alkoxy group-containing silane-modified polyamic acid resin was dissolved in N-methylpyrrolidone (or NMP), and further adding KETJENBLACK (or "KB") in an amount of 5% by weight to it, and then mixing the above with each other.

Thereafter, the aforementioned slurry was applied onto an 18-$\mu$m-thickness copper foil (an electrolytic copper foil was used in the present example) so as to be 1.25 mg/cm$^2$, and was formed as a film using a doctor blade.

The thus obtained sheet was dried at 80°C for 20 minutes, thereby removing NMP and the like by evaporating them. Thereafter, a current collector, which comprised the electrolytic copper foil, and the resulting negative-electrode active-material layer, which comprised the alkoxy group-containing silane-modified polyamic acid resin, Treated Active Material "A" and KETJENBLACK, were joined together firmly by adhesion by means a roller pressing machine. By means of this adhesion joining operation, an adjustment was also carried out so that a density of the resultant negative-electrode active-material layer became 1.2 g/cm$^3$.

This one was punched out to a substantially rectangular shape (26 mm $\times$ 31 mm), and was then heated in a vacuum furnace at 350°C for 1 hour in order to cure the binder, thereby obtaining an electrode according to Example No. 1.

(Example No. 2)

Except that Treated Active Material "B" was used as the active material instead of Treated Active Material "A," an electrode according to Example No. 2 was obtained in the same manner as Example No. 1.

(Example No. 3)

Except that Treated Active Material "C" was used as the active material instead of Treated Active Material "A, " an electrode according to Example No. 3 was obtained in the same manner as Example No. 1.

(Example No. 4)

Except that Treated Active Material "D" was used as the active material instead of Treated Active Material "A, " an electrode according to Example No. 4 was obtained in the same manner as Example No. 1.

(Comparative Example No. 1)

Except that the Si powder, which had not been surface-treated at all, was used as the active material instead of Treated Active Material "A," an electrode according to Comparative Example No. 1 was obtained in the same manner as Example No. 1.

(Comparative Example No. 2)

Except that the polyimide resin was used as the binder instead of the alkoxy group-containing silane-modified polyamic acid resin, an electrode according to Comparative Example No. 2 was obtained in the same manner as Example No. 1.

(Comparative Example No. 3)

Except that the Si powder, which had not been surface-treated at all, was used as the active material instead of Treated Active Material "A, " and that the polyimide resin was used as the binder instead of the alkoxy group-containing silane-modified polyamic acid resin, an electrode according to Comparative Example No. 3 was obtained in the same manner as Example No. 1.

(Comparative Example No. 4)

Except that the PVDF was used as the binder instead of the alkoxy group-containing silane-modified polyamic acid resin, and that the conditions for curing binder were set so that the binder was heated at 120°C for 6 hours instead of heating it at 350°C for 1 hour, an electrode according to Comparative Example No. 4 was obtained in the same manner as Example No. 1.

(Explanations on Electrode Assembly in Laminated Battery)

By means of Fig. 4, the constitution of an electrode assembly in a laminated battery will be explained. The electrode being made in accordance with the aforementioned procedure is adopted for the electrode 11 in Fig. 4.
The electrode 11 comprises a sheet-shaped current-collector foil 12 being composed of a copper foil, and a negative-electrode active-material layer 13 being formed on a surface of the current-collector foil 12. The current-collector foil 12 is provided with a substantially-rectangle-shaped mixture-material-applied portion 12a (26 mm × 31 mm), and a tab-welded potion 12b extending out from a corner of the mixture-material-applied portion 12a. On one of the faces of the mixture-material-applied potion 12a, the negative-electrode active-material layer 13 is formed. The negative-electrode active-material layer 13 includes the active material, the conductive additive, and the binder.
To the tab-welded portion 12b of the current-collector foil 12, a tab 14 being made of nickel is resistance welded. In addition, around the tab-welded portion 12b, a resinous film 15 is wrapped.

(Explanations on Laminated Battery)

By means of Fig. 4, the constitution of a laminated battery will be explained. As illustrated in Fig. 4, the laminated battery is provided with an electrode assembly 10, which is made by laminating an electrode 11, a counter electrode 16 and a separator 19; a laminated film (not shown), which wraps around the electrode assembly 10 to encapsulate it; and an electrolyte solution to be injected into the laminated film.
The constitution of the electrode 11 has been explained already. In the same manner as the electrode 11, the counter electrode 16 is provided with a substantially-rectangle-shaped mixture-material-applied portion 16a (25 mm × 30 mm), and a tab-welded potion 16b extending out from a corner of the mixture-material-applied portion 16a, and any of the two are composed of an aluminum foil, respectively. On one of the faces of the mixture-material-applied potion 16a, a positive-electrode active-material layer is formed. To the tab-welded portion 16b, a tab 17 being made of aluminum is resistance welded, whereas a resinous film 18 is further wrapped around the tab-welded portion 16b.
For the separator 19, a substantially-rectangle-shaped sheet (27 mm × 32 mm, and 25 $\mu$m in thickness) being composed of a polypropylene resin was used. The mixture-material-applied portion 12a of the electrode 11, the separator 19, and the mixture-material-applied portion 16a of the counter electrode 16 were laminated in this order so that the negative-electrode active-material layer and the positive-electrode active-material layer faced to each other by way of the separator 19, thereby constituting the electrode assembly 10.
Next, after covering the electrode assembly 10 with two pieces of laminated films making a set and then sealing them at the three sides, the aforementioned electrolyte solution was injected into the laminated films that were turned into a bag shape. Thereafter, the remaining other sides were sealed, and thereby it was possible to obtain a laminated battery whose four sides were sealed airtightly, and in which the electrode assembly 10 and the electrolytic solution were encapsulated. Note that a part of the tabs 14 and 17 of the both electrodes projects outward in order for the electric connection with the outside.

(Making of Laminated Batteries)

Laminated batteries with the aforementioned constitution were made by adapting one of the electrodes being prepared as above into the negative electrode; adapting an $LiCoO_2$ electrode, which were produced by PIOTREK Co., Ltd., whose capacity was 2.2 mAh/cm$^2$ and whose electrode density was 2.8 g/cm$^3$, into the positive electrode; and adapting 200 $\mu$L of a solution, namely, 1-mol/L $LiPF_6$/ethylene carbonate (or EC) + diethyl carbonate (or DEC) where EC: DEC = 1:1 (by volume ratio), into an electrolyte.

(Evaluation of Laminated Batteries)

An evaluation of each of the electrodes to be evaluated in these model batteries was carried out by the following method.

(Cyclic Test)

As charging, a CCCV charging (i.e., constant-current and constant-voltage charging) operation was carried out at 1C up to 4.2 V for 2.5 hours. As discharging, they were discharged at a constant electric current of 1C down to 3.0 V (that is, a CC discharging (i.e., constant-current discharging) operation at 1C).
While adapting those above into 1 cycle, the charging and discharging operations were carried out repeatedly at room temperature (i.e., 25°C), thereby examining the discharged capacities.
Fig. 2 is a graph for showing results of the charging/discharging cyclic test for the model batteries that had the

negative electrodes according to Example Nos. 1 through 4 and Comparative Example Nos. 1 through 4, and illustrates relationships between the number of cycles and the discharged current capacity maintenance ratios (%). Moreover, Fig. 3 illustrates an enlarged diagram of Fig. 2.

The discharged current capacity maintenance ratio (%) was calculated by the following equation.

$$\text{Discharged Current Capacity Maintenance Ratio (\%)} = \{(\text{Discharged Current Capacity at Each Cycle})/(\text{Discharged Current Capacity at First Cycle})\} \times 100$$

From Fig. 2 and Fig. 3, it was understood that Example Nos. 1 through 4 were always higher in the discharged current capacity maintenance ratio during the respective cycles, compared with Comparative Example Nos. 1 through 4. When comparing their discharged current capacity maintenance ratios at the 30th cycle with each other, Example No. 1 exhibited 79.1%; Example No. 2 exhibited 75.6%; Example No. 3 exhibited 78. 9%; wand Example No. 4 exhibited 75. 0%; whereas, Comparative Example No. 1 exhibited 70.7%; Comparative Example No. 2 exhibited 73.1%; Comparative Example No. 3 exhibited 73.2%; and Comparative Example No. 4 exhibited 8.0%.

In Comparative Example No. 4, the binder is a PVDF. Due to its deficiency in the mechanical strength and adhesive force, the discharged current capacity maintenance ratio declines sharply. When comparing Comparative Example No. 2 and Comparative Example No. 3 with each other, there are not any great differences between them; due to this fact, no advantages resulting from the surface treatment agent can be seen in the case where the binder is a polyimide resin.

On the contrary, the discharged current capacity maintenance ratios upgrade in Example Nos. 1 through 4 compared with that in Comparative Example No. 1. This is believed that, since the adhesiveness between the binder and the active material is enhanced by means of treating the active material by the use of the surface treatment agent, the active material is suppressed from coming off or falling down and thereby the discharged current capacity maintenance ratio has upgraded. From the comparison between Comparative Example No. 2 and Comparative Example No. 3, and from the comparison between Example Nos. 1 through 4 and Comparative Example No. 1, it was understood that, due to the setup that the binder has an alkoxy group-containing silane-modified part, the above advantages of the surface treatment agent can be demonstrated remarkably.

Moreover, as Comparative Example No. 5, a negative electrode was made in the following manner. An Si powder was used as the active material, and the active material was combined with a binder (i.e., the alkoxy group-containing silane-modified polyamic acid resin) to make a slurry. After applying that slurry onto a current collector, a surface treatment agent (i.e., tetraethoxysilane) was dropped thereto, and then the current collector, to which the slurry being wet by the surface treatment agent was applied, was heat-treated.

Although the electrode according to Comparative Example No. 5 was used to measure the battery characteristic in the same manner as the electrode according to Example No. 1, the battery characteristic did not upgrade at all compared with that of Comparative Example No. 1. In the electrode according to Comparative Example No. 5, the active material was surface-treated by the surface treatment agent after being combined with the binder. From this result, it was understood that it is necessary to combine the active material with the binder after surface-treating it with the surface treatment agent in advance.

## Claims

**1.** A negative electrode (11) for lithium-ion secondary battery, the negative electrode (11) having:

a current collector (1; 12); and
an active-material layer (6; 13) obtainable by applying a conductive additive, a surface-treated active material (2) and a binder (3) onto a surface of the current collector (1; 12);
wherein the surface-treated active material (2) is obtainable by surface treating an active material having hydroxyl groups on the surface thereof with use of a surface treatment agent that is specified by a general formula: $X\text{-}Si(CH_3)_n\text{-}(OR)_{3-n}$ wherein: "n" is 0, 1 or 2; "OR" is a methoxy group, or an ethoxy group; and "X" is a methoxy group, an ethoxy group, or a vinyl group;

**characterized in** than
said binder (3) comprises any of alkoxy group-containing silane-modified polyimide resins, alkoxy group-containing

silane-modified polyamide-imide resins, alkoxy group-containing silane-modified polyurethane resins, alkoxy group-containing silane-modified epoxy resins, alkoxy group-containing silane-modified acrylic resins, and alkoxy group-containing silane-modified phenolic resins;
wherein said surface treatment agent and said binder (3) form siloxane bonds.

**2.** The negative electrode (11) for lithium-ion secondary battery as set forth in claim 1, wherein said active material includes Si.

**3.** The negative electrode (11) for lithium-ion secondary battery as set forth in claim 1 or 2, wherein said surface treatment agent is used in an amount of from 1% by mass to 10% by mass with respect to said active material being taken as 100% by mass.

## Patentansprüche

**1.** Negativelektrode (11) für Lithiumionensekundärbatterie, wobei die Negativelektrode (11) aufweist:

einen Stromabnehmer (1; 12); und
eine Aktivmaterialschicht (6; 13), die durch Aufbringen eines leitfähigen Additivs, eines oberflächenbehandelten Aktivmaterials (2) und eines Bindemittels (3) auf eine Oberfläche des Stromabnehmers (1; 12) erhältlich ist;
wobei das oberflächenbehandelte Aktivmaterial (2) erhältlich ist durch Oberflächenbehandeln eines Aktivmaterials mit Hydroxylgruppen auf dessen Oberfläche unter Verwendung eines Oberflächenbehandlungsmittels, das durch eine allgemeine Formel: $X\text{-}Si(CH_3)_n\text{-}(OR)_{3-n}$ spezifiziert ist, wobei: in" ist 0, 1 oder 2; "OR" ist eine Methoxygruppe oder eine Ethoxygruppe; und zu" ist eine Methoxygruppe, eine Ethoxygruppe oder eine Vinylgruppe;

**dadurch gekennzeichnet, dass**
das Bindemittel (3) eines aus Alkoxygruppe-enthaltenden Silanmodifizierten Polyimidharzen, Alkoxygruppe-enthaltenden Silanmodifizierten Polyamid-Imidharzen, Alkoxygruppe-enthaltenden Silanmodifizierten Polyurethanharzen, Alkoxygruppe-enthaltenden Silanmodifizierten Epoxyharzen, Alkoxygruppe-enthaltenden Silanmodifizierten Acrylharzen und Alkoxygruppe-enthaltenden Silanmodifizierten Phenolharzen enthält;
wobei das Oberflächenbehandlungsmittel und das Bindemittel (3) Siloxanbindungen ausbilden.

**2.** Negativelektrode (11) für die Lithiumionensekundärbatterie nach Anspruch 1, wobei das Aktivmaterial Si enthält.

**3.** Negativelektrode (11) für Lithiumionensekundärbatterien nach Anspruch 1 oder 2, wobei das Oberflächenbehandlungsmittel in einer Menge von 1 Masse-% bis 10 Masse-% bezogen auf das Aktivmaterial, das als 100 Masse-% angenommen wird, eingesetzt wird.

## Revendications

**1.** Électrode négative (11) pour batterie secondaire au lithium-ion, l'électrode négative (11) ayant :

un collecteur de courant (1 ; 12); et
une couche de matériau actif (6; 13) pouvant être obtenue par application d'un additif conducteur, d'un matériau actif traité en surface (2) et d'un liant (3) sur une surface du collecteur de courant (1 ; 12) ;
dans laquelle le matériau actif traité en surface (2) peut être obtenu par traitement de surface d'un matériau actif ayant des groupes hydroxyle sur sa surface en utilisant un agent de traitement de surface qui est spécifié par une formule générale: $X\text{-}Si(CH_3)_n\text{-}(OR)_{3-n}$ où: "n" est égal à 0,1 ou 2 ; "OR" est un groupe méthoxy, ou un groupe éthoxy ; et "X" est un groupe méthoxy, un groupe éthoxy, ou un groupe vinyle;

**caractérisée en ce que**
ledit liant (3) comprend l'une parmi des résines de polyimide modifiées au silane contenant un groupe alcoxy, des résines de polyamide-imide modifiées au silane contenant un groupe alcoxy, des résines de polyuréthane modifiées au silane contenant un groupe alcoxy, des résines époxy modifiées au silane contenant un groupe alcoxy, des résines acryliques modifiées au silane contenant un groupe alcoxy, et des résines phénoliques modifiées au silane contenant un groupe alcoxy ;

dans laquelle ledit agent de traitement de surface et ledit liant (3) forment des liaisons siloxane.

2. Électrode négative (11) pour batterie secondaire au lithium-ion selon la revendication 1, dans laquelle ledit matériau actif comporte du Si.

3. Électrode négative (11) pour batterie secondaire au lithium-ion selon la revendication 1 ou 2, dans laquelle ledit agent de traitement de surface est utilisé en une quantité comprise entre 1% en masse et 10% en masse par rapport audit matériau actif étant pris comme représentant 100% en masse.

Fig. 1

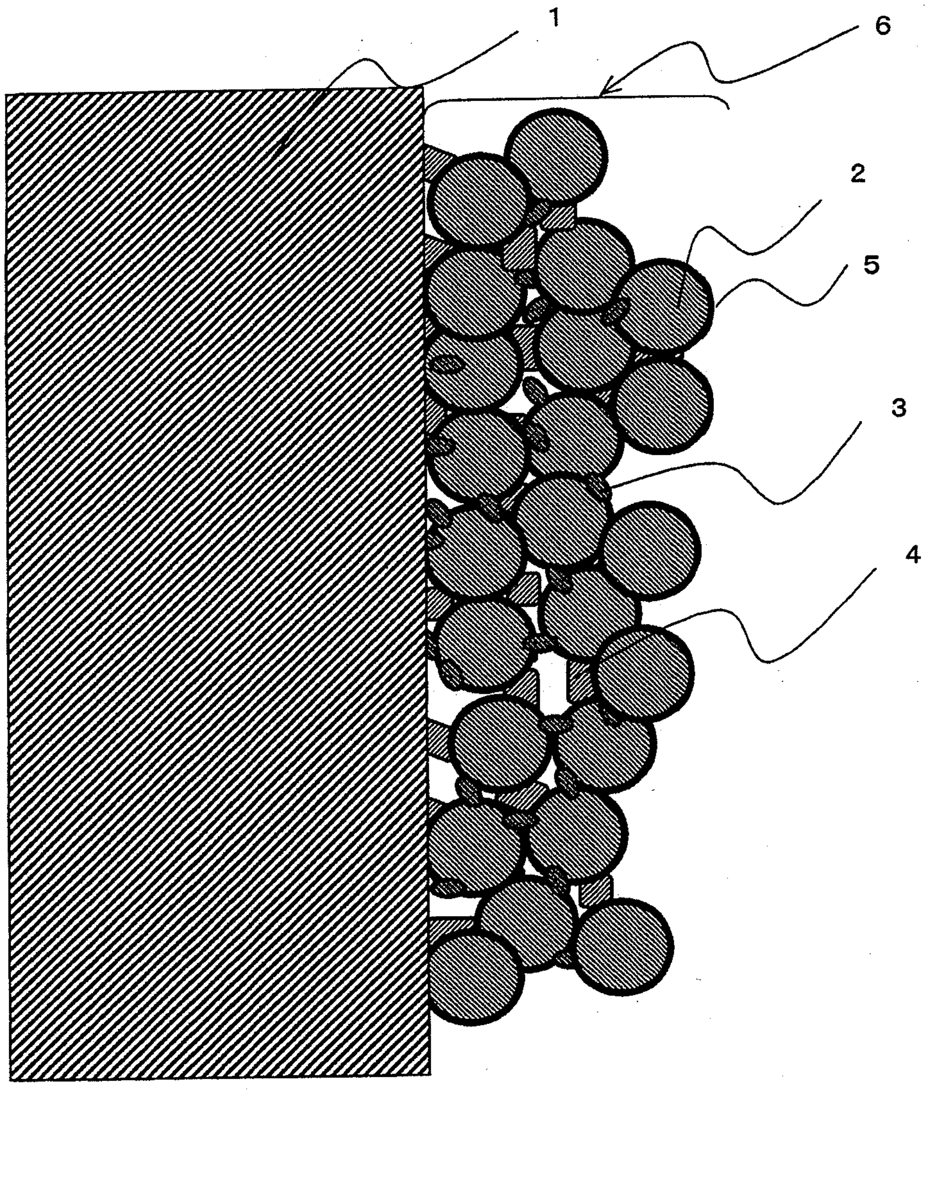

Fig. 2

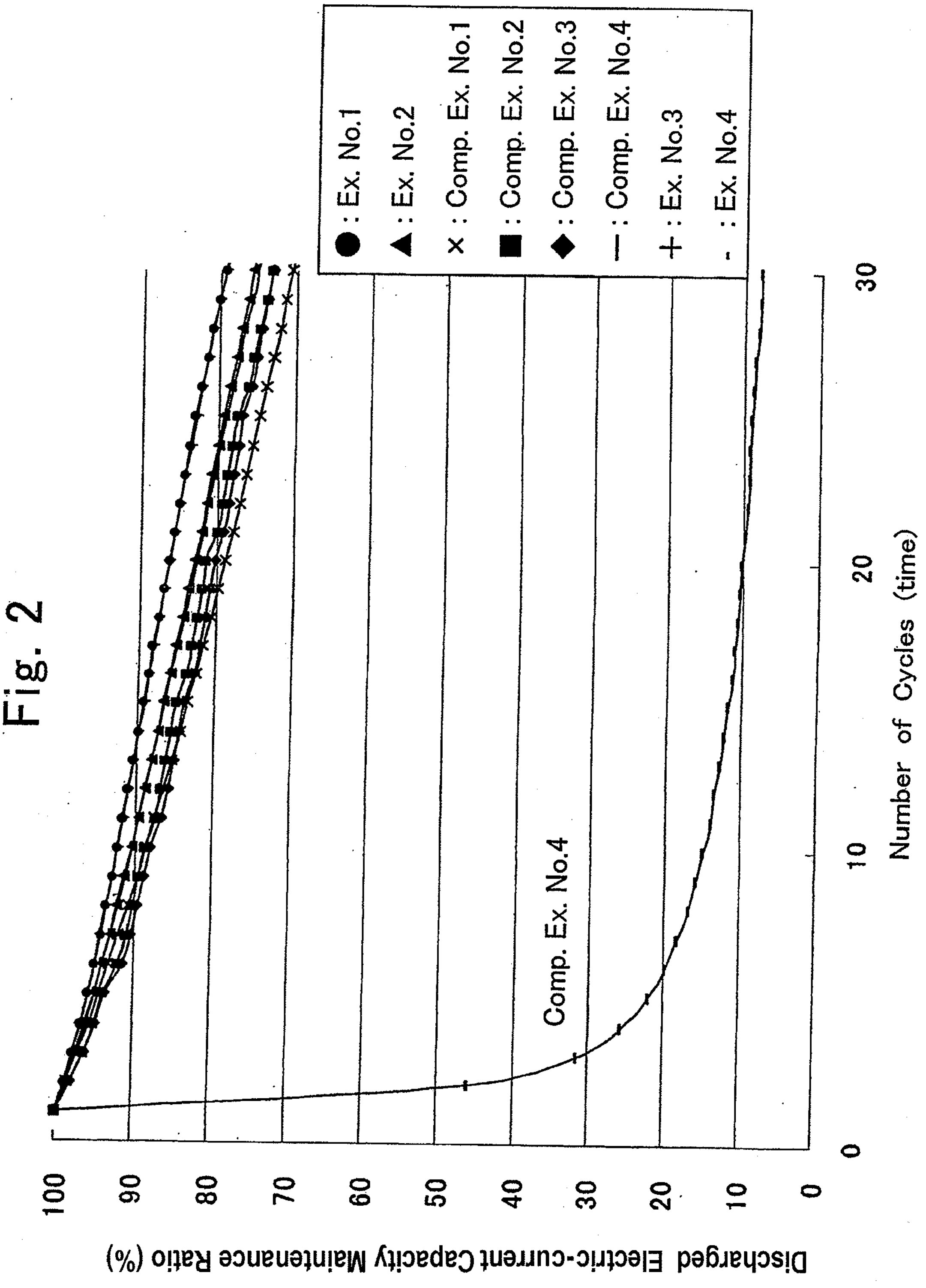
● : Ex. No.1
▲ : Ex. No.2
× : Comp. Ex. No.1
■ : Comp. Ex. No.2
◆ : Comp. Ex. No.3
— : Comp. Ex. No.4
+ : Ex. No.3
- : Ex. No.4
Comp. Ex. No.4
Discharged Electric-current Capacity Maintenance Ratio (%)
100
90
80
70
60
50
40
30
20
10
0
0
10
20
30
Number of Cycles (time)

Fig. 3

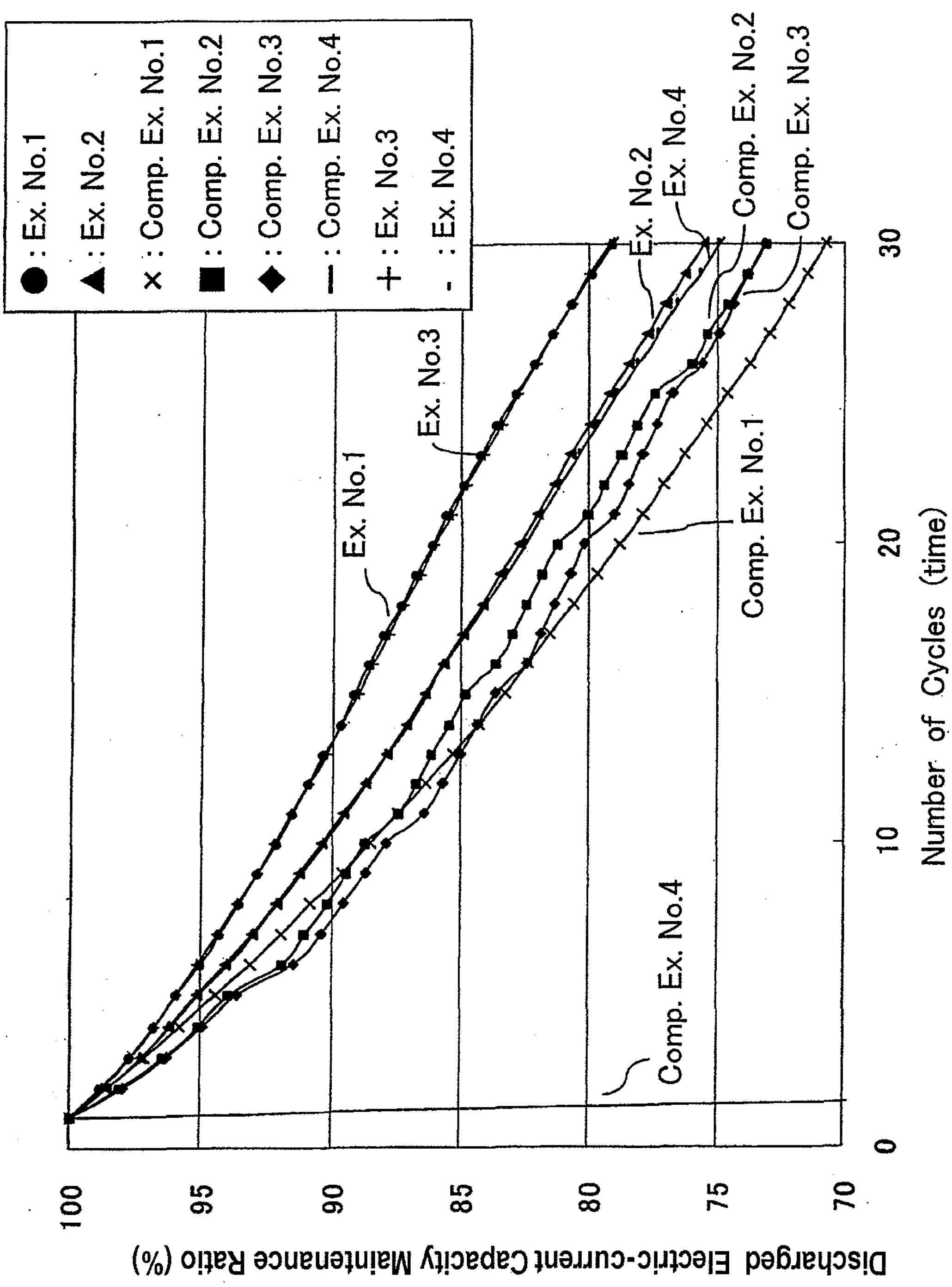
● : Ex. No.1
▲ : Ex. No.2
× : Comp. Ex. No.1
■ : Comp. Ex. No.2
◆ : Comp. Ex. No.3
— : Comp. Ex. No.4
+ : Ex. No.3
- : Ex. No.4
Ex. No.1
Ex. No.3
Ex. No.2
Ex. No.4
Comp. Ex. No.2
Comp. Ex. No.3
Comp. Ex. No.1
Comp. Ex. No.4
Discharged Electric-current Capacity Maintenance Ratio (%)
100
95
90
85
80
75
70
0
10
20
30
Number of Cycles (time)

Fig. 4

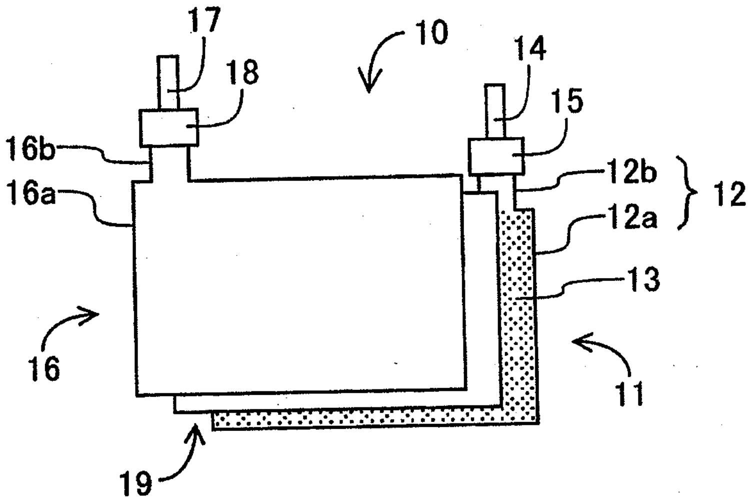

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009043678 A
- US 20060051670 A